(19) Europäisches Patentamt
European Patent Office
Office européen des brevets

(11) **EP 3 865 617 B1**

(12) **EUROPÄISCHE PATENTSCHRIFT**

(45) Veröffentlichungstag und Bekanntmachung des Hinweises auf die Patenterteilung:
**17.01.2024 Patentblatt 2024/03**

(21) Anmeldenummer: **21166530.2**

(22) Anmeldetag: **11.07.2017**

(51) Internationale Patentklassifikation (IPC):
*D06F 39/00* (2020.01)  *D06F 39/14* (2006.01)
*D06F 39/02* (2006.01)  *D06F 34/18* (2020.01)
*G01J 3/02* (2006.01)  *G01J 3/46* (2006.01)
*G01J 3/51* (2006.01)  *D06F 105/58* (2020.01)
*D06F 105/60* (2020.01)  *D06F 103/02* (2020.01)

(52) Gemeinsame Patentklassifikation (CPC):
**G01J 3/513; D06F 34/18; G01J 3/0264; G01J 3/0291; G01J 3/463;** D06F 2103/02; D06F 2105/58; D06F 2105/60

(54) **PRÜFEN AUF POTENTIELL UNERWÜNSCHTE WÄSCHESTÜCKE**

TESTING FOR POTENTIALLY UNWANTED ITEMS OF LAUNDRY

VÉRIFICATION DE LINGE POTENTIELLEMENT INDÉSIRABLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.07.2016 DE 102016212984**

(43) Veröffentlichungstag der Anmeldung:
**18.08.2021 Patentblatt 2021/33**

(62) Dokumentnummer(n) der früheren Anmeldung(en) nach Art. 76 EPÜ:
**17742209.4 / 3 485 081**

(73) Patentinhaber: Henkel AG & Co. KGaA
**40589 Düsseldorf (DE)**

(72) Erfinder:
• **Kessler, Arnd**
  **40789 Monheim am Rhein (DE)**
• **Nitsch, Christian**
  **40591 Düsseldorf (DE)**
• **Zuechner, Lars**
  **40764 Langenfeld (DE)**
• **Wawer, Georg**
  **1040 Wien (AT)**
• **Mueller, Alexander**
  **40789 Monheim (DE)**

(56) Entgegenhaltungen:
EP-B1- 2 659 047  WO-A1-2008/000812
US-A1- 2008 276 964

**EP 3 865 617 B1**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Gebiet der Erfindung

Die Erfindung betrifft unter anderem Verfahren und Vorrichtungen, welche insbesondere dazu dienen können, bei Waschvorgängen das Mitwaschen von unerwünschten Wäschestücken zu verhindern.

Hintergrund der Erfindung

Wachmaschinen können in verschiedenen Ausgestaltungsformen vorliegen. Man unterscheidet Toploader, bei denen die Ladeluke an der Oberseite liegt, und Frontlader, bei denen ein Bullauge als Ladeluke an der Vorderseite dient. Vorteil des Topladers ist, dass die Abdichtung der Tür einfacher ausgeführt und die Trommel auf zwei Seiten durch Wälzlager abgestützt sein kann, ein Toploader lässt sich auch in sehr engen Räumen aufstellen, wo nicht genügend Platz zum Öffnen einer vorderen Tür zur Verfügung steht. Ein Frontlader hingegen bietet auf der Oberseite Platz für z. B. einen Wäschetrockner oder für eine Arbeitsfläche und wird deswegen gelegentlich anstelle eines Unterschranks in eine Küchenzeile eingebaut. Toploader sind nachteilig, da sie mehr Wasservolumen für die Wäschereinigung als Frontlader benötigen.

Die amerikanischen Toploader haben immer eine rotierende Trommel und Mischelemente (Agitator oder Discs), wobei sich die Mischelemente mit oder gegen die Trommeldrehrichtung bewegen können. Die Maschinen können eine Laugenumwälzung und Sprühvorrichtungen für die Lauge aufweisen. Grundsätzlich werden Deep Fill und HE-Toploader unterschieden. Deep Fill Toploader arbeiten mit vorgegebenen Wasserniveaus, haben also keine Beladungserkennung. HE Maschinen verfügen in der Regel über eine Beladungserkennung und steuern danach die Wassermengen. In der Regel haben die Maschinen keine eingebaute Heizung, sondern werden an Warmwasser angeschlossen.

Aus dem Stand der Technik ist es bekannt, eine Waschmaschine mit Sensoren auszustatten, um unterschiedliche Parameter im Zusammenhang mit einem Waschvorgang zu ermitteln. So kann beispielsweise ein Mengensensor vorgesehen sein, um die Menge der Wäsche zu ermitteln. Derartige Informationen können dann den Waschvorgang, beispielsweise die Wassermenge beeinflussen.

Ebenfalls ist es aus dem Stand der Technik bekannt, die Farbe der Wäsche in einer Trommel einer Waschmaschine zu ermitteln. Problematisch ist dabei jedoch, dass nach einem Schließen der Beladungstür in einer Waschtrommel wenig Licht vorhanden ist. Hinzu kommt, dass Waschmaschinen oftmals in dunklen Räumen (z.B. im Keller) stehen. Dies kann ein Ermitteln der Farbe der Wäsche jedoch erschweren bzw. die Genauigkeit der ermittelten Farbe beeinträchtigen.

In der EP 2 659 047 B1 wird eine Waschmaschine vorgeschlagen, welche eine Trommel, eine Ladeöffnung, einen Balg und eine Abdeckung, die einen Rahmen und ein Glas aufweist, umfasst. Die Waschmaschine weist zudem einen oder mehrere lichtabhängige Widerstände auf, die an dem Balg angeordnet sind und die Lichtstärke in der Trommel erkennen, und deren Wert sich abhängig von der Lichtstärke in der Trommel ändert. Eine Steuereinheit ermöglicht die Steuerung des Waschvorgangs. Weiterhin sind mehrere Lichtquellen vorgesehen, die an dem Glas derart angeordnet sind, dass sich die von dem lichtabhängigen Widerstand erkannte Lichtstärke abhängig von der Beladungsrate der Trommel verändert. Eine Steuereinheit soll es ermöglichen, dass die Farbe der Wäsche, die in die Trommel gegeben wird, entsprechend der erkannten Lichtstärke bestimmt wird und den Waschvorgang entsprechend dieser Daten zu starten.

Dabei wird jedoch lediglich eine gemittelte Farbe der gesamten Wäsche ermittelt. Zudem kann es vorkommen, dass einzelne Wäschestücke verdeckt sind und somit deren Farbe nicht berücksichtigt werden kann.

Somit kann es vorkommen, dass unerwünscht unerkannte Wäschestücke in der zu waschenden Ladung Wäsche enthalten sind. So kann beispielsweise ein buntes Kleidungsstück, das in eine Ladung weißer Wäsche geraten ist, unerkannt bleiben und eine Verfärbung der weißen Wäsche beim Waschen hervorrufen.

Das Dokument US 2008/276964 A1 beschreibt Beispiele für ein Verfahren zur Einstellung des während eines Reinigungszyklus ausgegebenen Reinigungsmittels auf der Grundlage der Beladung und der Art der zu reinigenden Gegenstände, wobei die Art der zu reinigenden Gegenstände ihre Farbe einschließen kann. Das Dokument WO2008000812 beschreibt ein Verfahren zur Erkennung der Farbe von Wäschestücken in einem Haushaltsgerät unter Verwendung eines Farbsensors.

Es besteht somit weiterhin der Bedarf an einer Unterstützung des Benutzers bei der Vorbereitung von Waschvorgängen, sodass Bedienungsfehler durch den Benutzer, insbesondere beim Beladen der Waschmaschine, erkannt werden und das Waschergebnis nicht beeinträchtigt wird.

Allgemeine Beschreibung einiger beispielhafter Ausführungsformen der Erfindung Vor diesem Hintergrund liegt der Erfindung insbesondere die Aufgabe zugrunde, den Benutzer bei der Vorbereitung von Waschvorgängen zu unterstützen, sodass Bedienungsfehler durch den Benutzer, insbesondere beim Beladen der Waschmaschine, erkannt werden und das Waschergebnis nicht beeinträchtigt wird.

Gemäß einem ersten Aspekt der Erfindung wird ein Verfahren gemäß Anspruch 1 beschrieben. Dieses Verfahren, durchgeführt von zumindest einer Vorrichtung, umfasst: Beleuchten zumindest eines Teils von in einem Wäschebehälter einer Waschmaschine befindlichen, einem Waschvorgang zu unterziehenden Wäschestücken; Ermitteln von Farbinformation indikativ für eine oder mehrere Farben zumindest eines Teils der in dem Wäschebehälter der Waschmaschine befindlichen, beleuchteten Wäschestücke; Prüfen, zumindest teilweise basierend auf der ermittelten Farbinformation, ob sich ein potentiell unerwünschtes Wäschestück in dem Wäschebehälter der Waschmaschine befindet, wobei das potentiell unerwünschte Wäschestück ein Wäschestück ist, das in einem Waschvorgang nicht erwünscht ist und/oder das nicht mit übrigen Wäschestücken zusammen gewaschen werden soll,

- wobei das Beleuchten durch zumindest eine Beleuchtungseinheit erfolgt und/oder das Ermitteln von Farbinformation durch zumindest eine Detektoreinheit erfolgt, wobei das Verfahren dadurch charakterisiert ist, dass das Verfahren weiterhin umfasst:
- Durchmengen der in dem Wäschebehälter der Waschmaschine befindlichen Wäschestücke vor Beginn des Waschvorgangs, insbesondere zumindest zeitweise während des Beleuchtens und/oder des Ermittelns der Farbinformation
- Feststellen, dass sich ein potentiell unerwünschtes Wäschestück in dem Wäschebehälter (302) der Waschmaschine (300) befindet, wenn basierend auf der ermittelten Farbinformation ein Farbabstand einen vordefinierten Farbabstand erreicht oder überschreitet.

Gemäß einem zweiten Aspekt wird zudem eine Vorrichtung beschrieben, welche zumindest einen Prozessor, zumindest einen Speicher mit Computerprogrammcode, zumindest eine Beleuchtungseinheit und zumindest eine Detektoreinheit umfasst welche dazu eingerichtet ist ein Verfahren gemäß dem ersten Aspekt durchzuführen und/oder zu steuern..

Ebenfalls wird gemäß dem zweiten Aspekt eine alternative Vorrichtung beschrieben, umfassend zumindest einen Prozessor und zumindest einen Speicher mit Computerprogrammcode, wobei der zumindest eine Speicher und der Computerprogrammcode dazu eingerichtet sind, mit dem zumindest einen Prozessor, zumindest ein Verfahren gemäß dem ersten Aspekt auszuführen und/oder zu steuern. Unter einem Prozessor soll zum Beispiel eine Kontrolleinheit, ein Mikroprozessor, eine Mikrokontrolleinheit wie ein Mikrocontroller, ein digitaler Signalprozessor (DSP), eine anwendungsspezifische Integrierte Schaltung (ASIC) oder ein Field Programmable Gate Arrays (FPGA) verstanden werden.

Zum Beispiel umfasst eine beispielhafte Vorrichtung ferner Mittel zum Speichern von Informationen wie einen Programmspeicher und/oder einen Hauptspeicher. Zum Beispiel umfasst eine beispielhafte erfindungsgemäße Vorrichtung ferner jeweils Mittel zum Empfangen und/oder Senden von Informationen (Kommunikationsschnittstelle), zum Beispiel über ein Netzwerk mittels einer Netzwerkschnittstelle. Zum Beispiel sind beispielhafte Vorrichtungen über ein oder mehrere Netzwerke miteinander verbunden und/oder verbindbar. Beispielsweise ist die Kommunikationsschnittstelle zur Kommunikation mit einem drahtlosen Netzwerk (beispielsweise gemäß dem IEEE-802.11-Standard, dem Bluetooth (LE)-Standard und/oder dem NFC-Standard) eingerichtet.

Eine beispielhafte Vorrichtung gemäß dem zweiten Aspekt ist oder umfasst etwa eine Datenverarbeitungsanlage, die softwaremäßig und/oder hardwaremäßig eingerichtet ist, um die jeweiligen Schritte eines beispielhaften Verfahrens gemäß dem ersten Aspekt ausführen zu können.

Das Verfahren gemäß dem ersten Aspekt kann beispielsweise durch eine Vorrichtung gemäß dem zweiten Aspekt durchgeführt werden.

Durch ein Beleuchten zumindest eines Teils der Wäschestück wird erreicht, dass unabhängig von den äußeren Bedingungen eine ausreichende Beleuchtung der Wäschestücke sichergestellt wird. Dadurch kann ein Ermitteln von Farbinformation auch bei schlechten äußeren Bedingungen, wie wenig Tageslicht in einem dunklen Raum, ermöglicht werden oder jedenfalls die Qualität der Ermittlung verbessert werden. Im Ergebnis kann basierend auf der ermittelten Farbinformation zuverlässig geprüft werden, ob sich ein potentiell unerwünschtes Wäschestück in dem Wäschebehälter der Waschmaschine befindet.

Unter einem Beleuchten wird verstanden, dass eine Lichterzeugung mit Hilfe einer künstlichen Lichtquelle erfolgt, sodass insbesondere eine (bessere) Sichtbarmachung der Wäschestücke erfolgen kann. Die Beleuchtung erfolgt insbesondere durch Strahlung, welche zumindest teilweise im sichtbaren Bereich des elektromagnetischen Spektrums liegt, beispielsweise mit einer Strahlung dessen Wellenlänge zumindest einen Teil des Wellenlängenbereichs von 380 nm bis 780 nm abdeckt.

Ein Wäschebehälter kann beispielsweise eine Wäschetrommel einer Waschmaschine sein oder diese umfassen. Die Waschmaschine kann beispielsweise eine Haushaltswaschmaschine sein. Beispielsweise ist die Waschmaschine eine Trommelwaschmaschine. Beispielsweise dreht sich die Wäschetrommel um eine horizontale Achse. Beispielsweise ist die Waschmaschine ein Frontlader, bei der eine Beladungstür (insbesondere mit Bullauge) als Ladeluke an der Vorderseite dient.

Ein Waschvorgang kann beispielsweise ein Einweichen, eine Vorwäsche, einen Hauptwaschgang, ein Spülen, ein Weichspülen, ein Stärken, und/oder ein Endschleudern umfassen.

Unter einem Wäschestück wird insbesondere ein waschbares Textil verstanden. Ein Wäschestück kann also beispielsweise ein Haushaltswäschestück, Bettwäschestück, Oberbekleidungsstück, ein Vorhang, ein Polsterbezug etc. sein. Die Wäschestücke sind beispielsweise Schmutzwäsche.

Eine Farbinformation indikativ für eine oder mehrere Farben eines Wäschestücks kann beispielsweise eine Information repräsentativ für einen Farbton, eine Helligkeit und/oder eine Sättigung einer Farbe umfassen. Eine Farbinformation kann beispielsweise eine Information repräsentativ für einen oder mehrere Werte eines Farbraums umfassen. Eine Farbinformation muss nicht zwangsweise eine Information indikativ für eine bunte Farbe eines Wäschestücks enthalten, sondern kann auch lediglich eine Information über die Helligkeit eines Wäschestücks enthalten. Eine Farbinformation kann beispielsweise dadurch ermittelt werden, dass ein oder mehrere (digitale) Bilder oder ein oder mehrere (digitale) Videos aufgenommen werden. Die Farbinformation kann beispielsweise in Rohdaten eines Detektors oder Sensors enthalten sein. Die Farbinformation kann beispielsweise in bearbeiteten oder verarbeiteten Daten eines Detektors oder Sensors enthalten sein.

Dass das Prüfen auf der ermittelten Farbinformation basiert, kann bedeuten, dass das Prüfen unmittelbar auf der ermittelten Farbinformation oder mittelbar auf der ermittelten Farbinformation (beispielsweise auf aus der Farbinformation abgeleiteter Information) basieren kann.

Unter einem potentiell unerwünschten Wäschestück wird beispielsweise ein Wäschestück verstanden, bei dem zu vermuten ist, dass es in dem Waschvorgang nicht erwünscht ist und/oder nicht mit den übrigen Wäschestücken zusammen gewaschen werden soll. Hierzu können beispielsweise vordefinierte Kriterien verwendet werden. So kann beispielsweise ein buntes Wäschestück unter ansonsten weißen Wäschestücken potentiell unerwünscht sein. Ebenfalls kann ein weißes Wäschestück unter ansonsten farbigen Wäschestücken potentiell unerwünscht sein. Unter einem potentiell unerwünschten Wäschestück wird dabei zumindest ein potentiell unerwünschtes Wäschestück verstanden.

Gemäß einer Ausgestaltung des Verfahrens gemäß dem ersten Aspekt erfolgt das Beleuchten durch zumindest eine Beleuchtungseinheit und/oder das Ermitteln von Farbinformation durch zumindest eine Detektoreinheit.

Entsprechend umfasst gemäß einer Ausgestaltung der Vorrichtung gemäß dem zweiten Aspekt die Vorrichtung zumindest eine Beleuchtungseinheit und zumindest eine Detektoreinheit. Dabei kann die Vorrichtung die Waschmaschine oder ein Teil hiervon sein oder separat von der Waschmaschine ausgebildet sein.

Die Beleuchtungseinheit und die Detektoreinheit bilden beispielsweise eine bauliche Einheit oder sind integral ausgebildet (beispielsweise als eine Beleuchtungs-Detektor-Vorrichtung). Ebenfalls ist möglich, dass die Beleuchtungseinheit und die Detektoreinheit separat (beispielsweise als zwei separate bauliche Einheiten oder Vorrichtungen) ausgebildet sind.

Eine Beleuchtungseinheit umfasst insbesondere zumindest eine Beleuchtungsquelle. Beispielsweise umfasst die Beleuchtungseinheit eine oder mehrere Leuchtdioden. Wie bereits ausgeführt, ist die Beleuchtungseinheit insbesondere dazu eingerichtet, Strahlung, welche zumindest teilweise im sichtbaren Bereich des elektromagnetischen Spektrums liegt, beispielsweise mit einer Strahlung dessen Wellenlänge zumindest einen Teil des Wellenlängenbereichs von 380 nm bis 780 nm abdeckt, zu erzeugen.

Die Detektoreinheit umfasst insbesondere einen optoelektronischen Sensor oder optischen Detektor. Beispiele für optische Detektoren sind ein CMOS-Sensor (welcher vorteilhaft eine geringe Baugröße, einen geringen Stromverbrauch und hohe Bildraten erreichen kann), ein CCD-Sensor (welcher vorteilhaft eine hohe Auflösung und breite spektrale Empfindlichkeit erreichen kann), eine Photodiode (welche als schneller Sensor für sichtbares Licht, Infrarot und Ultraviolett dienen kann), ein Fototransistor (welcher vorteilhaft ein hohes Signal erreichen kann) oder ein Fotowiderstand (welcher günstig und leicht zu handhaben ist). Die Detektoreinheit ist beispielsweise eingerichtet, Bilder oder Videos bereitzustellen. Die Detektoreinheit kann beispielsweise zur Detektion von Farbton, Sättigung und/oder Helligkeit ausgebildet und kann beispielsweise Farbbilder oder Schwarzweißbilder bereitstellen. Beispielsweise ist die Detektoreinheit zur Detektion von Strahlung in einem bestimmten Wellenlängenbereich eingerichtet. Beispielsweise ist die Detektoreinheit auf die Beleuchtungseinheit abgestimmt, beispielsweise überlappen sich der Wellenlängenbereich der Strahlung, die durch die Beleuchtungseinheit emittiert wird, und der Wellenlängenbereich der Strahlung, die durch die Detektoreinheit detektiert werden kann, zumindest bereichsweise. Beispielsweise ist oder umfasst die Detektoreinheit eine (digitale) Kamera zur Aufnahme von statischen oder bewegten Bildern.

Gemäß einer Ausgestaltung des Verfahrens gemäß dem ersten Aspekt sind die Beleuchtungseinheit und/oder die Detektoreinheit innerhalb des Wäschebehälters der Waschmaschine angeordnet oder anordenbar.

Beispielsweise sind die Detektoreinheit und/oder die Beleuchtungseinheit im Bereich einer Ladeöffnung der Waschmaschine angeordnet. Beispielsweise sind die Detektoreinheit und/oder die Beleuchtungseinheit im Bereich einer Tür der Waschmaschine angeordnet. Beispielsweise sind die Detektoreinheit und/oder die Beleuchtungseinheit im Bereich der Wäschebehälterdichtung angeordnet.

Durch die Anordnung die Detektoreinheit und/oder die Beleuchtungseinheit innerhalb des Wäschebehälters der Waschmaschine können die Detektoreinheit bzw. die Beleuchtungseinheit nahe an den Wäschestücken angeordnet werden, was die Qualität der ermittelten Farbinformation verbessern kann. Sind die die Detektoreinheit und/oder die Beleuchtungseinheit zudem ortsfest innerhalb des Wäschebehälters angeordnet, kann die Beleuchtung bzw. Detektion in Bezug auf diese Position optimiert werden.

Gemäß einer Ausgestaltung des Verfahrens gemäß dem ersten Aspekt sind die Beleuchtungseinheit und/oder die Detektoreinheit innerhalb des Wäschebehälters der Waschmaschine frei beweglich ausgebildet.

Durch eine frei bewegliche Ausbildung der Beleuchtungseinheit und/oder der Detektoreinheit kann eine Vermengung der Beleuchtungseinheit bzw. Detektoreinheit mit den Wäschestücken erfolgen. Dies kann die Wahrscheinlichkeit erhöhen, dass ein potentiell unerwünschtes Wäschestück erkannt wird. Insbesondere kann die Ermittlung von Farbinformation von unterschiedlichen Orten innerhalb des Wäschebehälters erfolgen.

Beispielsweise bilden die Beleuchtungseinheit und/oder die Detektoreinheit eine separat von der Waschmaschine ausgebildete bauliche Einheit (beispielsweise ein Beleuchtungs-Detektor-Vorrichtung). Die Beleuchtungseinheit und/oder die Detektoreinheit können dann beim Beladen der Waschmaschine mit den Wäschestücken ebenfalls in den Wäschebehälter gegeben werden. Beispielsweise sind die Beleuchtungseinheit und/oder die Detektoreinheit (gemeinsam oder jeweils) in einem insbesondere kantenarmen, beispielsweise im Wesentlichen kugelförmigen Gehäuse untergebracht. Beispielsweise ist das Gehäuse zumindest teilweise elastisch oder nicht rigide ausgebildet. Dies kann die Gefahr einer Beschädigung der Wäschestücke durch die Beleuchtungseinheit und/oder die Detektoreinheit ausschließen oder verringern. Beispielsweise ist das Gehäuse wasserdicht ausgebildet.

Beispielsweise weist die Detektoreinheit zumindest in einer Ebene einen Detektionswinkel von mindestens 45°, bevorzugt mindestens 90°, weiter bevorzugt mindestens 180° und weiter bevorzugt mindestens 270° auf. Beispielsweise weist die Detektoreinheit zumindest in einer Ebene einen Detektionswinkel von 360° auf. Beispielsweise weist die Kamera sowohl in einer horizontalen Ebene, als auch in einer vertikalen Ebene einen Detektionswinkel von 360° auf. Beispielswiese ist die oder umfasst die Detektionseinheit einen omnidirektionalen Detektor (beispielsweise eine omnidirektionale Kamera). Hierdurch kann die Wahrscheinlichkeit weiterhin erhöht werden, dass ein potentiell unerwünschtes Wäschestück erkannt wird.

Gemäß einer Ausgestaltung des Verfahrens gemäß dem ersten Aspekt sind die Beleuchtungseinheit und/oder die Detektoreinheit außerhalb des Wäschebehälters der Waschmaschine angeordnet oder anordenbar.

Durch eine Anordnung der Beleuchtungseinheit und/oder der Detektoreinheit außerhalb des Wäschebehälters, brauchen diese nicht wasserdicht ausgebildet zu werden. Zudem brauchen die Beleuchtungseinheit und/oder die Detektoreinheit lediglich für geringere mechanische Beanspruchungen ausgelegt werden, als wenn diese innerhalb des Wäschebehälters angeordnet oder vorgesehen werden.

Beispielsweise sind die Beleuchtungseinheit und/oder die Detektoreinheit für eine Befestigung an der Waschmaschine, beispielsweise an der Beladungstür der Waschmaschine, ausgebildet. Beispielsweise kann die Beleuchtungseinheit und/oder die Detektoreinheit formschlüssig (beispielsweise durch Verrasten), kraftschlüssig (beispielsweise mittels Klemmen) und/oder stoffschlüssig (beispielsweise mittels Kleben) an der Beladungstür oder im Bereich der Beladungstür befestigt werden. Da die Beladungstür in der Regel teilweise durchsichtig ausgebildet ist, beispielsweise ein Bullauge aufweist, kann sowohl eine Beleuchtung als eine Ermittlung von Farbinformation von außen durch die Tür der Waschmaschine erfolgen.

Beispielsweise umfasst das Verfahren weiterhin ein Unterziehen der ermittelten Farbinformation einem Bearbeitungsalgorithmus.

Hierdurch kann zum einen eine bessere Unterscheidung von verschiedenfarbigen Wäschestücken erreicht werden. Ebenfalls kann eine eher der menschlichen Farbwahrnehmung entsprechende Beurteilung von Farben erreicht werden. Beispielsweise wird die ermittelte Farbinformation einem Konvertierungsalgorithmus unterzogen. Beispielsweise kann eine Konvertierung der ermittelten Farbinformation (beispielsweise eines oder mehrerer Bilder) von einem ersten Farbraum in einen zweiten Farbraum erfolgen. Beispiele für Farbräume sind etwa ein RGB-Farbraum oder ein L*a*b*-Farbraum. Beispielsweise erfolgt eine Konvertierung der ermittelten Farbinformation von einem RGB-Farbraum in einen L*a*b*-Farbraum.

Unter einem RGB-Farbraum ist ein additiver Farbraum, der Farbwahrnehmungen durch das additive Mischen dreier Grundfarben (Rot, Grün und Blau) nachbildet, zu verstehen. Ein Beispiel für einen L*a*b*-Farbraum ist beispielsweise der CIELAB-Farbraum, der in der EN ISO 11664-4 "Colorimetry -- Part 4: CIE 1976 L*a*b* Colour space" (CIE 1976 Farbraum) genormt ist. Vorteilhaft ist hier, dass Farben unabhängig von der Art ihrer Erzeugung oder Wiedergabetechnik so definiert werden, wie sie von einem Normalbeobachter bei einer Standard-Lichtbedingung wahrgenommen werden (Geräteunabhängigkeit und Wahrnehmungsbezogenheit).

Erfindungsgemäß umfasst das Verfahren weiterhin ein Feststellen, dass sich ein potentiell unerwünschtes Wäschestück in dem Wäschebehälter der Waschmaschine befindet, wenn basierend auf der ermittelten Farbinformation ein Farbabstand einen vordefinierten Farbabstand erreicht oder überschreitet.

Hierdurch kann auf verlässliche Weise ein potentiell unerwünschtes Wäschestück geschlossen werden. Da der Farbabstand auf der ermittelten Farbinformation basiert, ist der Farbabstand repräsentativ für den Farbabstand der Farben zumindest eines Teils der in dem Wäschebehälter der Waschmaschine befindlichen Wäschestücke. Unter einem Farbabstand wird insbesondere ein Abstand von zwei Farborten in einem Farbraum verstanden. Dabei ist die Betrachtung eines Farbabstands in einem gleichabständigen Farbraum, wie einem L*a*b*-Farbraum, vorteilhaft. Beispielsweise wird der Farbabstand $\Delta E$ im L*a*b*-Farbraum bestimmt durch

$$\Delta E^2 = (\Delta L^*)^2 + (\Delta a^*)^2 + (\Delta b^*)^2$$

Ein Beispiel zur Berechnung des Farbabstandes ist dem Abschnitt 5.1.2 in "Review of Bayer Pattern Color Filter Array (CFA) Demosaicing with New Quality Assessment Algorithms" by Robert A. Maschal Jr., S. Susan Young, Joe Reynolds, Keith Krapels, Jonathan Fanning, and Ted Corbin, ARL-TR-5061, January 2010 zu entnehmen, wobei die Offenbarung dieses Abschnittes explizit durch Referenzierung ("incorporation by reference") in diese Anmeldung mit aufgenommen wird.

Grundsätzlich ist jedoch denkbar, dass alternativ oder zusätzlich in anderen Fällen oder unter anderen Bedingungen auf ein potentiell unerwünschtes Wäschestück in dem Wäschebehälter der Waschmaschine geschlossen werden kann.

Erfindungsgemäß umfasst das Verfahren weiterhin ein Durchmengen der in dem Wäschebehälter der Waschmaschine befindlichen Wäschestücke vor Beginn des Waschvorgangs, insbesondere zumindest zeitweise während des Beleuchtens und/oder des Ermittelns der Farbinformation.

Hierdurch kann die Gefahr verringert oder vermieden werden, dass ein potentiell unerwünschtes Wäschestück aufgrund seiner Positionierung in dem Wäschebehälter nicht erkannt werden kann, da es beispielsweise durch andere, nicht potentiell unerwünschte Wäschestücke bedeckt ist. Dass das Durchmengen vor dem Beginn des Waschvorgangs erfolgt, bedeutet insbesondere, dass das Durchmengen der in dem Wäschebehälter befindlichen Wäschestücke in trockenen Zustand erfolgt, also bevor Wasser und/oder Waschmittel in den Wäschebehälter gespült wird. Das Durchmengen kann im Falle einer Trommelwaschmaschine durch Drehen der Trommel erfolgen.

Es ist denkbar, dass ein Durchmengen jeweils vor einem Beleuchten und Ermitteln der Farbinformation erfolgt und durch (ein oder mehrmalige) Wiederholen des Prozesses die Wahrscheinlichkeit erhöht wird, dass ein potentiell unerwünschtes Wäschestück erkannt wird. Es hat sich jedoch gezeigt, dass es vorteilhaft ist, dass ein Beleuchten und Ermitteln der Farbinformation zumindest zeitweise während des Durchmengens erfolgt.

Gemäß einer Ausgestaltung des Verfahrens gemäß dem ersten Aspekt erfolgt das Durchmengen derart, dass sich die in dem Wäschebehälter der Waschmaschine befindlichen Wäschestücke zeitweise in freiem Fall befinden.

Auf diese Weise wird ein hoher Grand der Durchmengung erreicht, sodass die Farbinformation indikativ für die Farbe oder die Farben möglichst vieler oder aller Wäschestücke ist. Somit kann die Wahrscheinlichkeit, dass ein potentiell unerwünschtes Wäschestück gefunden werden kann, weiter erhöht werden. Bevorzugt werden die Wäschestücke dabei derart durchmengt, dass die Wäschestücke zu einem oberen Bereich des Wäschebehälters ("oberer Totpunkt") bewegt werden und von dort frei herunterfallen.

Gemäß einer Ausgestaltung des Verfahrens gemäß dem ersten Aspekt umfasst das Verfahren weiterhin ein Feststellen, dass sich die in dem Wäschebehälter der Waschmaschine befindlichen Wäschestücke zeitweise in freiem Fall befinden, zumindest basierend auf zumindest einem Parameter des den Wäschebehälter antreibenden Antriebs.

Beispielsweise wird die Drehzahl des Antriebs (beispielsweise ein elektrischer Motor) insbesondere kontinuierlich geändert, beispielsweise erhöht. Dabei kann zum Beispiel die Stromaufnahme des Antriebs überwacht werden. Es hat sich gezeigt, dass die Stromaufnahme des Antriebs als Parameter des Antriebs verwendet werden kann, um festzustellen, dass die Wäschestücke bis in den oberen Bereich bewegt werden und frei herunterfallen.

Gemäß einer Ausgestaltung des Verfahrens gemäß dem ersten Aspekt umfasst das Verfahren weiterhin ein Unterbinden oder Aussetzen des Waschvorgangs, falls festgestellt wird, dass sich ein potentiell unerwünschtes Wäschestück in dem Wäschebehälter der Waschmaschine befindet.

Durch ein Unterbinden eines geplanten (beispielsweise von einem Benutzer gewählten) Waschvorgangs oder ein Aussetzen eines bereits teilweise begonnen Waschvorgangs kann verhindert werden, dass das potentiell unerwünschte Wäschestück selbst oder die übrigen Wäschestücke aufgrund des potentiell unerwünschten Wäschestücks beschädigt (beispielsweise verfärbt) werden.

Ebenfalls kann das Verfahren vorteilhaft auch ein Initiieren eines Waschvorgangs umfassen, falls nicht festgestellt wird, dass sich ein potentiell unerwünschtes Wäschestück in dem Wäschebehälter der Waschmaschine befindet.

Gemäß einer Ausgestaltung des Verfahrens gemäß dem ersten Aspekt umfasst das Verfahren weiterhin ein Bereitstellen oder Auslösen eines Bereitstellens einer Ausgabe an einen Benutzer, falls festgestellt wird, dass sich ein potentiell unerwünschtes Wäschestück in dem Wäschebehälter der Waschmaschine befindet.

Hierdurch kann erreicht werden, dass ein Benutzer die Möglichkeit erhält, zu beurteilen, ob das potentiell unerwünschte Wäschestück in der Tat ein in dem Waschvorgang unerwünschtes Wäschestück ist oder ob es absichtlich den Wäschestücken für den Waschvorgang hinzugefügt wurde (und somit kein unerwünschtes Wäschestück ist) oder ob es, obwohl es ein unerwünschtes Wäschestück ist, toleriert werden soll. Die Ausgabe an den Benutzer kann beispielsweise den Benutzer darüber informieren, dass sich ein potentiell unerwünschtes Wäschestück in dem Wäschebehälter befindet. Beispielsweise erfolgt eine visuelle, haptische, oder akustische Ausgabe an den Benutzer. Beispielsweise umfasst die Ausgabe an den Benutzer eine Textnachricht. Beispielsweise umfasst die Ausgabe an den Benutzer ein Bild oder ein Video, welches das potentiell unerwünschte Wäschestück darstellt. Hierzu kann beispielsweise ein mit der Detektoreinheit aufgenommenes Bilde oder Video verwendet werden.

Die Ausgabe erfolgt in einem Beispiel durch eine Benutzerschnittstelle der Waschmaschine. Alternativ oder zusätzlich kann die Ausgabe durch eine Benutzerschnittstelle einer Datenverarbeitungsanlage des Benutzers (beispielsweise eines Mobilgeräts des Benutzers) erfolgen. Hierzu können beispielsweise eine die Detektoreinheit umfassende Vorrichtung und die Waschmaschine oder die Datenverarbeitungsanlage des Benutzers drahtlos oder drahtgebunden miteinander kommunizieren.

Gemäß einer Ausgestaltung des Verfahrens gemäß dem ersten Aspekt umfasst das Verfahren weiterhin ein Initiieren oder Fortsetzen des Waschvorgangs, falls eine Freigabe des Waschvorgangs von einem Benutzer erhalten wird.

Hierdurch kann ein zunächst unterbundener Waschvorgang initiiert werden, beispielsweise nachdem der Benutzer das unerwünschte Wäschestück aus dem Wäschebehälter der Waschmaschine entfernt hat oder nachdem der Benutzer erkannt hat, dass es sich nicht um ein unerwünschtes Wäschestück handelt. Beispielsweise kann der Benutzer die Freigabe über eine Benutzerschnittstelle an der Waschmaschine oder einer Datenverarbeitungsanlage (beispielsweise ein Mobilgerät des Benutzers) erteilen.

Gemäß einer Ausgestaltung des Verfahrens gemäß dem ersten Aspekt umfasst das Verfahren weiterhin ein Initiieren oder Fortsetzen des Waschvorgangs bei oder nach Ablauf einer vordefinierte Zeitdauer und optional ein Beeinflussen eines oder mehrere Parameter des Waschvorgangs.

Ist beispielsweise ein Waschvorgang aufgrund eines potentiell unerwünschten Wäschestücks unterbunden oder ausgesetzt worden, kann es wünschenswert sein, dass der Waschvorgang trotzdem initiiert wird. Dadurch, dass ein Initiieren oder Fortsetzen des Waschvorgangs bei oder nach der vordefinierten Zeitdauer erfolgt, wird vermieden, dass der Waschvorgang vollständig unterbleibt. Beispielsweise beginnt die Zeitdauer mit dem Unterbinden oder Aussetzen des Waschvorgangs oder mit dem Bereitstellen oder Auslösen des Bereitstellens der Ausgabe an den Benutzer.

Um jedoch einen Schaden an dem potentiell unerwünschten Wäschestück oder den übrigen Wäschestücken zu vermeiden oder zu verringern, kann bevorzugt ein oder mehrere Parameter des Waschvorgangs beeinflusst werden. Beispielsweise können die Wäschestücke lediglich in einem Schonwaschgang (beispielsweise bei geringer Temperatur) gewaschen werden. Somit kann sowohl ein vollständiges Unterbleiben eines Waschvorgangs vermieden werden, als auch die Gefahr einer Beschädigung der Wäschestücke verringert werden.

Gemäß einer Ausgestaltung des Verfahrens gemäß dem ersten Aspekt umfasst das Verfahren weiterhin ein Ermitteln eines oder mehrerer empfohlener Parameter für den Waschvorgang zumindest teilweise basierend auf der ermittelten Farbinformation.

Die ermittelte Farbinformation kann vorteilhaft nicht nur dazu verwendet werden, zu prüfen, ob sich ein potentiell unerwünschtes Wäschestück in dem Wäschebehälter der Waschmaschine befindet, sondern zudem zur Ermittlung zumindest eines vorteilhaften Parameters für den Waschvorgang.

Auf diese Weise kann die ermittelte Farbinformation gleichzeitig zur Optimierung des Waschvorgangs verwendet werden. Beispielsweise kann bei weißen Wäschestücken eine hohe Temperatur als empfehlenswert ermittelt werden oder bei bunten Wäschestücken die Verwendung eines Farbwaschmittels (mit einem Farbinhibitor) als empfehlenswert ermittelt werden.

Gemäß einer Ausgestaltung des Verfahrens gemäß dem ersten Aspekt umfassen der eine oder die mehreren empfohlenen Parameter für den Waschvorgang einen Temperaturparameter, einen Schleuderparameter, ein Waschprogrammparameter, und/oder einen Waschmittelparameter.

Ein Temperaturparameter ist beispielsweise repräsentativ für die Waschtemperatur. Ein Schleuderparameter ist beispielsweise repräsentativ dafür, ob ein Schleudern erfolgen soll, oder für eine Schleuderdrehzahl. Ein Waschprogrammparameter ist beispielsweise repräsentativ für die Art des Waschprogramms (beispielsweise Pflegeleicht, Buntwäsche, Kochwäsche). Ein Waschmittelparameter ist beispielsweise repräsentativ für die Art oder Menge des Waschmittels.

Beispielsweise umfasst das Verfahren weiterhin ein Bereitstellen oder Auslösen eines Bereitstellens einer Empfehlung basierend auf dem einen oder den mehreren ermittelten, empfohlenen Parametern für den Waschvorgang an einen Benutzer.

Hierdurch kann dem Benutzer eine zusätzliche Information für den Waschvorgang bereitgestellt werden. Beispielsweise kann der Benutzer daraufhin möglicherweise bereits eingestellte Parameter für den Waschvorgang überprüfen und gegebenenfalls ändern. Dadurch kann die Qualität des Ergebnisses des Waschvorgangs weiter gesteigert werden. Beispielsweise erfolgt eine Ausgabe an den Benutzer durch eine Benutzerschnittstelle der Waschmaschine oder durch eine Benutzerschnittstelle einer Datenverarbeitungsanlage (beispielsweise eines Mobilgeräts des Benutzers).

Gemäß einer Ausgestaltung des Verfahrens gemäß dem ersten Aspekt umfasst das Verfahren weiterhin ein Beeinflussen des Waschvorgangs, zumindest teilweise basierend auf dem einen oder den mehreren ermittelten, empfohlenen Parametern für den Waschvorgang.

Dies hat den Vorteil, dass der Benutzer die Parameter für den Waschvorgang nicht manuell anpassen muss. Vielmehr können die ermittelten empfohlenen Parameter herangezogen werden, um den Waschvorgang automatisiert anzupassen. Dies erhöht die Benutzerfreundlichkeit und den Bedienkomfort für den Benutzer weiterhin. Dies ist insbesondere vorteilhaft, wenn die Waschmaschine über ein automatisches Dosiersystem verfügt, bei dem das Waschmittel (beispielsweise aus mit der Waschmaschine verbundenen Kartuschen) automatisiert dem Waschvorgang zugegeben werden kann. Dabei können mehrere Kartuschen vorgesehen sein, welche unterschiedliche Waschmittel enthalten können. Es dann sowohl die Dosierung als auch die Art des Waschmittels automatisiert beeinflusst werden.

Alternativ oder zusätzlich ist denkbar, dass beispielsweise die beschriebene Beleuchtungseinheit und/oder Detektoreinheit auch zur Identifikation eines Waschmittels verwendet werden kann. So kann beispielsweise eine bildliche Analyse des verwendeten Waschmittels erfolgen und dadurch das Waschmittel identifiziert werden. In Abhängigkeit des identifizierten Waschmittels kann dann ebenfalls der Waschvorgang beeinflusst werden und insbesondere Parameter für den Waschvorgang eingestellt werden.

Beispielsweise wird auch ein Computerprogramm beschrieben, das Programmanweisungen umfasst, die einen Prozessor zur Ausführung und/oder Steuerung eines Verfahrens gemäß dem ersten Aspekt veranlassen, wenn das Computerprogramm auf dem Prozessor läuft. Ein beispielhaftes Programm gemäß der Erfindung kann in oder auf einem computerlesbaren Speichermedium gespeichert sein, welches eines oder mehrere Programme enthält.

Beispielsweise wird auch ein computerlesbares Speichermedium beschrieben, welches ein Computerprogramm gemäß dem dritten Aspekt enthält. Ein computerlesbares Speichermedium kann z.B. als magnetisches, elektrisches, elektro-magnetisches, optisches und/oder andersartiges Speichermedium ausgebildet sein. Ein solches computerlesbares Speichermedium ist vorzugsweise gegenständlich (also "berührbar"), zum Beispiel ist es als Datenträgervorrichtung ausgebildet. Eine solche Datenträgervorrichtung ist beispielsweise tragbar oder in einer Vorrichtung fest installiert. Beispiele für eine solche Datenträgervorrichtung sind flüchtige oder nicht-flüchtige Speicher mit wahlfreiem-Zugriff (RAM) wie z.B. NOR-Flash-Speicher oder mit sequentiellen-Zugriff wie NAND-Flash-Speicher und/oder Speicher mit Nur-Lese-Zugriff (ROM) oder Schreib-Lese-Zugriff. Computerlesbar soll zum Beispiel so verstanden werden, dass das Speichermedium von einem Computer bzw. einer Datenverarbeitungsanlage (aus)gelesen und/oder beschrieben werden kann, beispielsweise von einem Prozessor.

Beispielsweise wird auch ein System beschrieben umfassend mehrere Vorrichtungen, insbesondere umfassend eine Vorrichtung gemäß dem zweiten Aspekt, welche zusammen dazu eingerichtet sind, ein Verfahren gemäß dem ersten Aspekt durchführen.

Beispielsweise umfasst ein System eine erste Vorrichtung, welche eine Beleuchtungseinheit und eine Detektoreinheit umfasst (z.B. eine Beleuchtungs-Detektor-Vorrichtung) und zudem eine Waschmaschine und/oder eine Datenverarbeitungsanlage des Benutzers. Beispiele für eine Datenverarbeitungsanlage sind ein Computer, ein Desktop-Computer, ein Server, ein Thinclient und/oder ein tragbarer Computer (Mobilgerät), wie etwa ein Laptop-Computer, ein Tablet-Computer, ein Wearable, ein persönlicher digitaler Assistent oder ein Smartphone.

Die zuvor in dieser Beschreibung beschriebenen beispielhaften Ausgestaltungen der vorliegenden Erfindung sollen auch in allen Kombinationen miteinander offenbart verstanden werden. Insbesondere sollen beispielhafte Ausgestaltungen in Bezug auf die unterschiedlichen Aspekten offenbart verstanden werden.

Insbesondere sollen durch die vorherige oder folgende Beschreibung von Verfahrensschritten gemäß bevorzugter Ausführungsformen eines Verfahrens auch entsprechende Mittel zur Durchführung der Verfahrensschritte durch bevorzugte Ausführungsformen einer Vorrichtung offenbart sein. Ebenfalls soll durch die Offenbarung von Mitteln einer Vorrichtung zur Durchführung eines Verfahrensschrittes auch der entsprechende Verfahrensschritt offenbart sein.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Kurze Beschreibung der Figuren

In der Zeichnung zeigt

Fig. 1    eine schematische Darstellung eines Ausführungsbeispiels eines Systems gemäß der Erfindung;

Fig. 2    ein Blockdiagramm eines Ausführungsbeispiels einer Vorrichtung gemäß der Erfindung zur Durchführung eines Ausführungsbeispiels eines Verfahrens gemäß der Erfindung;

Fig. 3    eine schematische Darstellung der Beleuchtungs-Detektor-Vorrichtung aus Fig. 1 in perspektivischer Ansicht;

Fig. 4    eine schematische Darstellung der Waschmaschine aus Fig.1 in perspektivischer Ansicht;

Fig. 5    ein Ablaufdiagramm eines Ausführungsbeispiels eines Verfahrens gemäß der Erfindung;

und

Fig. 6     unterschiedliche Ausführungsbeispiele eines Speichermediums.

Detaillierte Beschreibung einiger beispielhafter Ausführungsformen der Erfindung

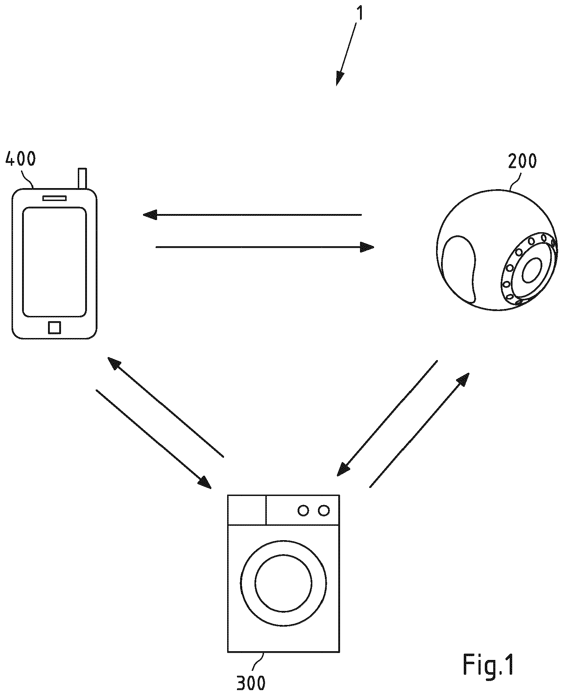

Fig. 1 zeigt zunächst eine schematische Darstellung eines Ausführungsbeispiels eines Systems 1 gemäß der Erfindung umfassend die Vorrichtungen 200, 300 und 400. Das System ist zur Ausführung von beispielhaften Verfahren gemäß der Erfindung eingerichtet. Die Vorrichtung 200 ist eine beispielhafte Beleuchtungs-Detektor-Vorrichtung 200 und die Vorrichtung 300 ist eine beispielhafte Waschmaschine 300. Sowohl die Beleuchtungs-Detektor-Vorrichtung 200 als auch die Waschmaschine 300 können jeweils eine Vorrichtung gemäß der Erfindung sein. Weiterhin umfasst das System 1 als weitere Vorrichtung das Mobilgerät 400 in Form eines Smartphones. Auch das Mobilgerät 400 kann einzelne Schritte beispielhafter Verfahren gemäß der Erfindung ausführen. Die Vorrichtung 400 kann jedoch ebenfalls ein Computer, ein Desktop-Computer oder ein tragbarer Computer, wie etwa ein Laptop-Computer, ein Tablet-Computer, ein persönlicher digitaler Assistent (PDA) oder ein Wearable sein. Die Vorrichtungen können jeweils beispielsweise die Funktion eines Servers oder eines Clients erfüllen. Ebenfalls ist denkbar, dass das System 1 auch nur zwei oder auch mehr als drei Vorrichtungen umfasst.

Jede der Vorrichtungen 200, 300, 400 kann eine Kommunikationsschnittstelle aufweisen, um mit einer oder mehreren der anderen Vorrichtungen zu kommunizieren bzw. Informationen auszutauschen.

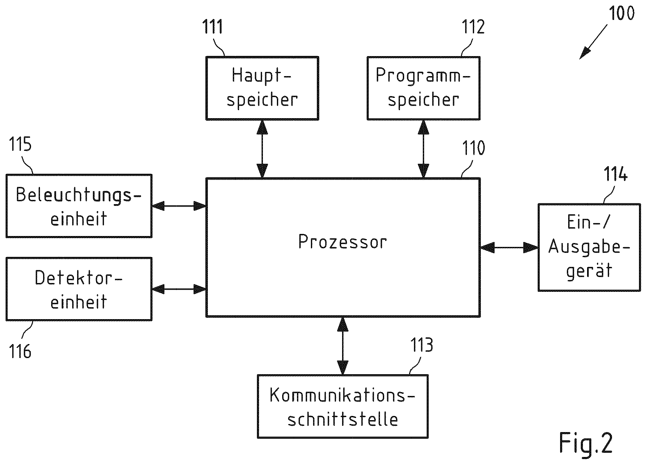

Fig. 2 zeigt nun ein Blockdiagramm 100 eines Ausführungsbeispiels einer Vorrichtung gemäß der Erfindung zur Durchführung eines Ausführungsbeispiels eines Verfahrens gemäß der Erfindung. Das Blockdiagramm 100 aus Fig. 2 kann dabei beispielhaft sowohl für die in Fig. 1 dargestellte Beleuchtungs-Detektor-Vorrichtung 200 als auch für die in Fig. 1 dargestellte Waschmaschine 300 oder einen Teil hiervon sein.

Die Vorrichtung 100 weist insbesondere eine Beleuchtungseinheit 115 auf. Die Beleuchtungseinheit 115 kann eine oder mehrere Beleuchtungsquellen, wie etwa Leuchtdioden umfassen. Die Beleuchtungseinheit ist hier dazu eingerichtet, Strahlung im sichtbaren Bereich des elektromagnetischen Spektrums zu erzeugen.

Die Vorrichtung 100 weist weiterhin eine Detektoreinheit 116 auf. Die Detektoreinheit 116 umfasst insbesondere einen optoelektronischen Sensor. Die Detektoreinheit umfasst bevorzugt eine Kamera, welche zur Aufnahme von statischen oder bewegten Bildern ausgebildet ist.

Die Beleuchtungseinheit 115 und die Detektoreinheit 116 der Vorrichtung 100 können durch Prozessor 110 gesteuert werden oder mit diesem kommunizieren.

Prozessor 110 der Vorrichtung 100 ist insbesondere als Mikroprozessor, Mikrokontrolleinheit, Mikrocontroller, digitaler Signalprozessor (DSP), Anwendungsspezifische Integrierte Schaltung (ASIC) oder Field Programmable Gate Array (FPGA) ausgebildet.

Prozessor 110 führt Programmanweisungen aus, die in Programmspeicher 112 gespeichert sind, und speichert beispielsweise Zwischenergebnisse oder ähnliches in Arbeits- oder Hauptspeicher 111. Zum Beispiel ist Programmspeicher 112 ein nicht-flüchtiger Speicher wie ein Flash-Speicher, ein Magnetspeicher, ein EEPROM-Speicher (elektrisch löschbarer programmierbarer Nur-LeseSpeicher) und/oder ein optischer Speicher. Hauptspeicher 111 ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Programmspeicher 112 ist vorzugsweise ein lokaler mit der Vorrichtung 100 fest verbundener Datenträger. Mit der Vorrichtung 100 fest verbundene Datenträger sind beispielsweise Festplatten, die in die Vorrichtung 100 eingebaut sind. Alternativ kann der Datenträger beispielsweise auch ein mit der Vorrichtung 100 trennbar verbindbarer Datenträger sein wie ein Speicher-Stick, ein Wechseldatenträger, eine tragbare Festplatte, eine CD, eine DVD und/oder eine Diskette.

Programmspeicher 112 enthält beispielsweise das Betriebssystem von der Vorrichtung 100, das beim Starten der Vorrichtung 100 zumindest teilweise in Hauptspeicher 111 geladen und vom Prozessor 110 ausgeführt wird. Insbesondere wird beim Starten von Vorrichtung 100 zumindest ein Teil des Kerns des Betriebssystems in den Hauptspeicher 111 geladen und von Prozessor 110 ausgeführt. Das Betriebssystem von Vorrichtung 100 ist beispielsweise ein Windows -, UNIX-, Linux-, Android-, Apple iOS- und/oder MAC-Betriebssystem.

Das Betriebssystem ermöglicht insbesondere die Verwendung der Vorrichtung 100 zur Datenverarbeitung. Es verwaltet beispielsweise Betriebsmittel wie Hauptspeicher 111 und Programmspeicher 112, Kommunikationsschnittstelle 113, Ein- und Ausgabegerät 114, stellt unter anderem durch Programmierschnittstellen anderen Programmen grundlegende Funktionen zur Verfügung und steuert die Ausführung von Programmen.

Prozessor 110 steuert zudem die Kommunikationsschnittstelle 113, welche beispielsweise eine Netzwerkschnittstelle sein kann und als Netzwerkkarte, Netzwerkmodul und/oder Modem ausgebildet sein kann. Die Kommunikationsschnittstelle 113 ist insbesondere dazu eingerichtet, eine Verbindung der Vorrichtung 100 mit anderen Vorrichtungen, insbesondere über ein (drahtloses) Kommunikationssystem, beispielsweise ein Netzwerk, herzustellen und mit diesen zu kommunizieren. Die Kommunikationsschnittstelle 113 kann beispielsweise Daten (über das Kommunikationssystem) empfangen und an Prozessor 110 weiterleiten und/oder Daten von Prozessor 110 empfangen und (über das Kommunikationssystem) senden. Beispiele für ein Kommunikationssystem sind ein lokales Netzwerk (LAN), ein großräumiges Netzwerk (WAN), ein drahtloses Netzwerk (beispielsweise gemäß dem IEEE-802.11-Standard, dem Bluetooth (LE)-Standard und/oder dem NFC-Standard), ein drahtgebundenes Netzwerk, ein Mobilfunknetzwerk, ein Telefonnetzwerk und/oder das Internet. Beispielsweise kann mittels der Kommunikationsschnittstelle 113 mit dem Internet und/oder anderen Vorrichtungen kommuniziert werden. Im Falle der Vorrichtung 200 kann mittels der Kommunikationsschnittstelle 113 beispielsweise mit der Waschmaschine 300 oder dem Mobilgerät 400 kommuniziert werden. Im Falle der Vorrichtung 300 kann mittels der Kommunikationsschnittstelle 113 beispielsweise mit der der Beleuchtungs-Detektor-Vorrichtung 200 oder dem Mobilgerät 400 kommuniziert werden.

Des Weiteren kann Prozessor 110 zumindest ein Ein-/Ausgabegerät 114 steuern. Ein-/Ausgabegerät 114 ist beispielsweise eine Tastatur, eine Maus, eine Anzeigeeinheit, ein Mikrofon, eine berührungsempfindliche Anzeigeeinheit, ein Lautsprecher, ein Lesegerät, ein Laufwerk und/oder eine Kamera. Ein-/Ausgabegerät 114 kann beispielsweise Eingaben eines Benutzers aufnehmen und an Prozessor 110 weiterleiten und/oder Informationen für den Benutzer von Prozessor 110 empfangen und ausgeben.

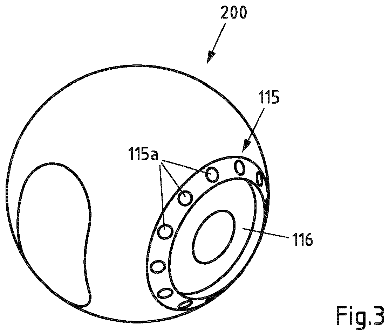

Fig. 3 zeigt nun eine schematische Darstellung der Beleuchtungs-Detektor-Vorrichtung 200 aus Fig. 1 in perspektivischer Ansicht. Die Beleuchtungs-Detektor-Vorrichtung 200 ist eine separat von der Waschmaschine 300 ausgebildete Vorrichtung. Die Beleuchtungs-Detektor-Vorrichtung 200 weist ein im Wesentlichen kugelförmiges, wasserdichtes Gehäuse auf, welches zumindest teilweise aus einem nicht rigiden oder elastischen Material besteht. Die Beleuchtungs-Detektor-Vorrichtung 200 umfasst eine Beleuchtungseinheit 115, welche hier mehrere Leuchtdioden 115a umfasst. Die Beleuchtungseinheit kann zumindest einen Teil von in einem Wäschebehälter einer Waschmaschine befindlichen, einem Waschvorgang zu unterziehenden Wäschestücken beleuchten. Zudem weist die Beleuchtungs-Detektor-Vorrichtung 200 eine Detektoreinheit 116 auf, welche hier als Kamera ausgebildet ist. Die Detektoreinheit 116 kann eine Farbinformation indikativ für eine oder mehrere Farben zumindest eines Teils von in einem Wäschebehälter einer Waschmaschine befindlichen, beleuchteten Wäschestücken ermitteln. Die Beleuchtungs-Detektor-Vorrichtung 200 ist dazu ausgebildet in einen Wäschebehälter einer Waschmaschine (beispielsweise Waschmaschine 300) gebracht zu werden und darin frei beweglich mit der Wäsche durchmengt zu werden. Ebenfalls ist jedoch denkbar, dass die Beleuchtungs-Detektor-Vorrichtung 200 derart ausgebildet ist, das diese außerhalb einer Waschmaschine angeordnet werden kann, beispielsweise im Bereich der Beladungstür einer Waschmaschine befestigt werden kann, sodass für die Beleuchtungs-Detektor-Vorrichtung ein optischer Zugangs zum Wäschebehälter der Waschmaschine möglich ist.

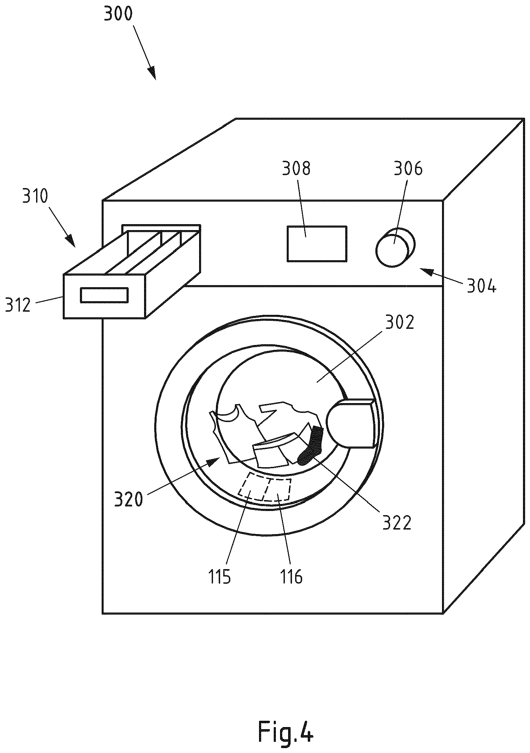

Fig. 4 zeigt eine schematische Darstellung der Waschmaschine 300 aus Fig. 1 in perspektivischer Ansicht. Die in Fig. 2 dargestellte Vorrichtung 100 ist in diesem Fall die Waschmaschine 300 oder in diese integriert. Die Waschmaschine 300 ist in diesem Fall eine automatische Haushaltswaschmaschine für Textilien, welche als Trommelwaschmaschine ausgebildet ist, bei der sich eine Wäschetrommel 302 um eine horizontale Achse dreht (Frontlader). Ebenfalls ist jedoch die Verwendung anderer Arten von Reinigungsvorrichtungen denkbar. Die Waschmaschine 300 umfasst neben der Trommel 302 Benutzerschnittstellen 304 in Form eines Bedienelements 306 und eines Anzeigeelements 308. Das Bedienelement 306 ist als Drehknopf ausgebildet und kann der Einstellung unterschiedlicher Waschparameter, beispielsweise des Waschprogramms und/oder der Waschtemperatur, dienen. Das Anzeigeelement 308 kann dem Benutzer Informationen optisch anzeigen. Allerdings kann die Waschmaschine 300 auch weitere Benutzerschnittstellen aufweisen. Die Waschmaschine 300 umfasst weiterhin eine Einspüleinrichtung 310, welche eine Einspülschublade 312 umfasst. Diese dient zur Aufnahme eines Reinigungsmittels.

Die Waschmaschine 300 umfasst ferner eine Beleuchtungseinheit 115 und eine Detektoreinheit 116, welche hier nur schematisch dargestellt sind. Die Beleuchtungseinheit 115 und die Detektoreinheit 116 sind im Bereich der Wäschebehälterdichtung der Wäschetrommel 302 angeordnet. Mittels der Beleuchtungseinheit kann zumindest ein Teil von in dem Wäschebehälter 302 der Waschmaschine 300 befindlichen, einem Waschvorgang zu unterziehenden Wäschestücken 320 beleuchtet werden. Mittels der Detektoreinheit 116 kann eine Farbinformation indikativ für eine oder mehrere Farben zumindest eines Teils der in dem Wäschebehälter 302 der Waschmaschine 300 befindlichen, beleuchteten Wäschestücke 320 ermittelt werden. Unter den Wäschestücken 320 befindet sich dabei ein potentiell unerwünschtes Wäschestück 322. Aufgrund des Farbabstandes des (zum Beispiel schwarzen) Wäschestücks 322 im Vergleich zu den übrigen (zum Beispiel weißen) Wäschestücken 320 kann das Wäschestück 322 als potentiell unerwünschtes Wäschestück 322 identifiziert werden.

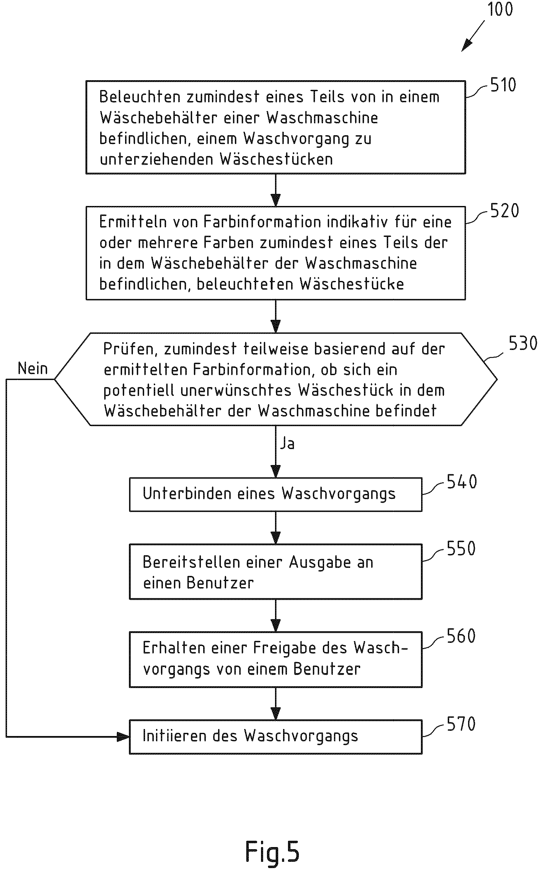

Hierzu zeigt Fig. 5 ein Ablaufdiagramm 500 eines Ausführungsbeispiels eines Verfahrens gemäß der Erfindung, welches in diesem Fall durch das System 1 durchgeführt wird. Ausgestaltungen des Verfahrens können jedoch auch nur durch einzelne Vorrichtungen, beispielsweise die Vorrichtung 200 oder die Vorrichtung 300 alleine ausgeführt werden.

Zunächst wird ein Wäschebehälter einer Waschmaschine mit Wäschestücken beladen (beispielsweise Wäschestücke 320 in Wäschebehälter 302 der Waschmaschine 300). Ist eine separate Beleuchtungs-Detektor-Vorrichtung (etwa Vorrichtung 200) vorgesehen, wird diese entweder mit den Wäschestücken in den Wäschebehälter gegeben oder beispielsweise außerhalb des Wäschebehälters fixiert. Sind sowohl die Beleuchtungseinheit als auch die Detektoreinheit integral mit der Waschmaschine ausgebildet (wie bei Waschmaschine 300), ist dies jedoch nicht notwendig.

Durch die Waschmaschine können die in dem Wäschebehälter der Waschmaschine befindlichen Wäschestücke vor Beginn des Waschvorgangs im trockenen Zustand durchmengt werden. Dabei kann die Waschmaschine vorteilhaft durch eine Überwachung eines Parameters des Antriebs (zum Beispiel der Motorstromaufnahme) der Waschmaschine feststellen, dass sich die in dem Wäschebehälter der Waschmaschine befindlichen Wäschestücke zeitweise in freiem Fall befinden.

Während des Durchmengens (zusätzlich oder alternativ auch vorher und/oder nachher) kann zunächst zumindest ein Teil von in einem Wäschebehälter einer Waschmaschine (beispielsweise Wäschetrommel 302 der Waschmaschine 300) befindlichen, einem Waschvorgang zu unterziehenden Wäschestücken 320 beleuchtet werden, beispielsweise durch Beleuchtungseinheit 115 (Aktion 510).

Dies ermöglicht unabhängig von den in der Wäschetrommel oder dem Raum, in dem sich die Waschmaschine befindet, vorherrschenden Lichtbedingungen, ein Ermitteln von Farbinformation indikativ für eine oder mehrere Farben zumindest eines Teils der in dem Wäschebehälter der Waschmaschine befindlichen, beleuchteten Wäschestücke, beispielsweise durch Detektoreinheit 116 (Aktion 520). Die ermittelte Farbinformation kann bei Bedarf Bearbeitungsalgorithmen unterzogen werden.

Zumindest teilweise auf Basis der ermittelten Farbinformation kann sodann ein Prüfen erfolgen, ob sich ein potentiell unerwünschtes Wäschestück (zum Beispiel Wäschestück 322) in dem Wäschebehälter der Waschmaschine befindet.

Wird beispielsweise festgestellt, dass sich kein potentiell unerwünschtes Wäschestück in dem Wäschebehälter der Waschmaschine befindet, kann daraufhin der Waschvorgang initiiert werden (Aktion 570).

Wird beispielsweise hingegen festgestellt, dass sich (zumindest) ein potentiell unerwünschtes Wäschestück in dem Wäschebehälter der Waschmaschine befindet (beispielsweise weil ein Wäschestück einen zu großen Farbabstand im Vergleich zu einem weiteren oder den übrigen Wäschestücken hat), erfolgt bevorzugt ein Unterbinden des Waschvorgangs (Aktion 540).

Zudem kann eine Ausgabe an einen Benutzer erfolgen (Aktion 550). Diese kann den Benutzer beispielsweise darüber informieren, dass ein potentiell unerwünschtes Wäschestück erkannt wurde. Ebenfalls kann eine (statische oder bewegte) Darstellung des Wäschestücks an den Benutzer ausgegeben werden. Die Ausgabe kann beispielsweise über eine Benutzerschnittstelle der Waschmaschine (zum Beispiel Anzeigeelement 308) und/oder über ein Mobilgerät (zum Beispiel Mobilgerät 400) erfolgen.

Der Benutzer kann dann entscheiden, ob es sich bei dem potentiell unerwünschten Wäschestück um ein tatsächlich unerwünschtes Wäschestück handelt oder ob es sich um ein absichtlich in dem Wäschebehälter befindliches oder erwünschtes Wäschestück handelt.

Hat der Benutzer das unerwünschte Wäschestück aus dem entfernt Wäschebehälter entfernt, oder soll das Wäschestück mitgewaschen werden, kann der Benutzer ein Initiieren des Waschvorgangs freigeben. Dies kann ebenfalls über die Benutzerschnittstelle der Waschmaschine (zum Beispiel Anzeigeelement 308) und/oder über das Mobilgerät (zum Beispiel Mobilgerät 400) erfolgen.

Erhält die Waschmaschine die Freigabe des Benutzers (Aktion 560) kann ein Initiieren des Waschvorgangs erfolgen (Aktion 570). Alternativ oder zusätzlich kann ein Initiieren des Waschvorgangs auch unabhängig von einer Freigabe des Benutzers erfolgen, wenn (zum Beispiel seit der Ausgabe an den Benutzer) eine vordefinierte Zeitdauer erreicht oder überschritten ist.

Weiterhin ist es möglich, einen oder mehrere empfohlene Parameter (wie eine empfohlene Temperatur, eine empfohlene Dosierung, ein empfohlenes Waschmittel) für den Waschvorgang zumindest teilweise basierend auf der ermittelten Farbinformation zu ermitteln. Hierdurch kann dann eine entsprechende Empfehlung an den Benutzer ausgegeben werden. Alternativ oder zusätzlich kann der Waschvorgang auch beeinflusst werden, indem die entsprechenden Parameter (soweit möglich) auch automatisch eingestellt werden.

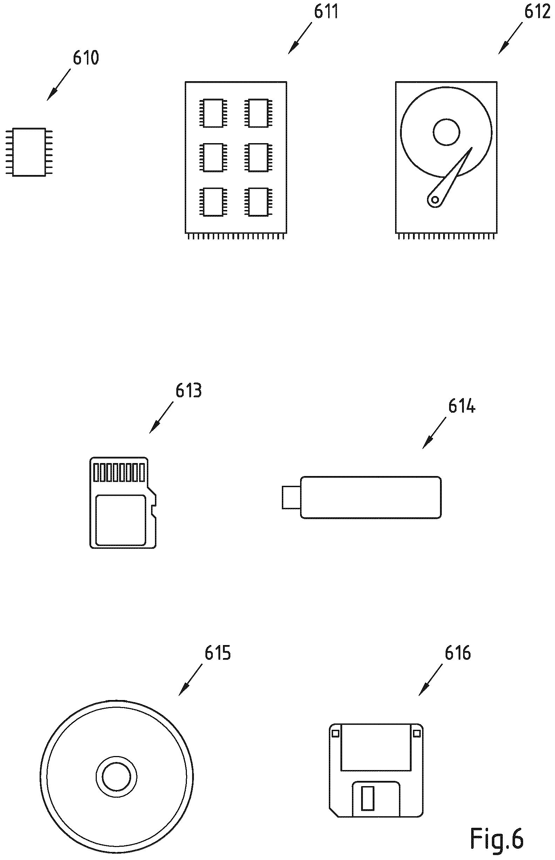

Fig.6 zeigt schließlich unterschiedliche Ausführungsbeispiele von Speichermedien, auf denen ein Ausführungsbeispiel eines erfindungsgemäßen Computerprogrammes gespeichert sein kann. Das Speichermedium kann beispielsweise ein magnetisches, elektrisches, optisches und/oder andersartiges Speichermedium sein. Das Speichermedium kann beispielsweise Teil eines Prozessors (z.B. des Prozessor 110 der Fig. 2) sein, beispielsweise ein (nicht-flüchtiger oder flüchtiger) Programmspeicher des Prozessors oder ein Teil davon (wie Programmspeicher 112 in Fig. 2). Ausführungsbeispiele eines Speichermediums sind ein Flash-Speicher 610, eine SSD-Festplatte 611, eine magnetische Festplatte 612, eine Speicherkarte 613, ein Memory Stick 614 (z.B. ein USB-Stick), eine CD-ROM oder DVD 615 oder eine Diskette 616.

Die in dieser Spezifikation beschriebenen Ausführungsbeispiele der vorliegenden Erfindung und die diesbezüglich jeweils angeführten optionalen Merkmale und Eigenschaften sollen auch in allen Kombinationen miteinander offenbart verstanden werden. Insbesondere soll auch die Beschreibung eines von einem Ausführungsbeispiel umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

Einzelne Verfahrensschritte (beispielsweise das Erhalten einer Information, das Prüfen eines bevorstehenden Schritts), welche beispielswiese nicht unbedingt mit der Ermittlung von Farbinformation durchgeführt werden müssen, können von einer weiteren Vorrichtung vorgenommen werden, welche insbesondere über ein Kommunikationssystem mit der Vorrichtung, welche die Sensoreinrichtung aufweist, in Verbindung steht. Eine solche weitere Vorrichtung kann beispielswiese ein Server sein und beispielsweise ein Teil bzw. eine Komponente einer sogenannten Computer Cloud sein, welche Datenverarbeitungsressourcen dynamisch für verschiedene Nutzer in einem Kommunikationssystem bereitstellt. Unter einer Computer Cloud wird insbesondere eine Datenverarbeitungs-Infrastruktur gemäß der Definition des "National Institute for Standards and Technology" (NIST) für den englischen Begriff "Cloud Computing" verstanden. Ein Beispiel einer Computer Cloud ist eine Microsoft Windows Azure Platform.

Ebenfalls ist es möglich, dass das mehrmalige Erhalten und/oder Ermitteln von Information z.B. von Quantitätsinformation und/oder Qualitätsinformation für ein maschinelles Lernen genutzt wird. So kann ein Profil beispielsweise zumindest teilweise basierend auf maschinellem Lernen bestimmt werden. Unter einem maschinellen Lernen wird verstanden, dass ein künstliches System (zum Beispiel eine Vorrichtung gemäß dem zweiten Aspekt oder ein System gemäß dem dritten Aspekt) aus Beispielen lernt und diese nach Beendigung der Lernphase verallgemeinern kann. Das heißt, es werden nicht einfach die Beispiele auswendig gelernt, sondern es werden Muster und Gesetzmäßigkeiten in den Lerndaten erkannt. Hierzu können unterschiedliche Ansätze verfolgt werden. Beispielsweise kann ein überwachtes Lernen, ein teilüberwachtes Lernen, ein unüberwachtes Lernen, ein bestärktes Lernen und/oder ein Aktives Lernen eingesetzt werden. Ein überwachtes Lernen kann beispielsweise mittels eines künstlichen neuronalen Netzes (etwa einem rekurrenten neuronalen Netz) oder mittels einer Support Vector Machine erfolgen. Auch ein unüberwachtes Lernen kann beispielsweise mittels eines künstlichen neuronales Netzes (beispielsweis eines Autoencoders) erfolgen. Als Lerndaten dienen dann beispielsweise insbesondere die mehrmalig erhaltenen und/oder ermittelten Informationen, insbesondere Quantitätsinformationen und/oder Qualitätsinformationen.

Alternativ oder zusätzlich ist denkbar, dass die erhaltenen und/oder ermittelten Informationen, insbesondere Quantitätsinformationen und/oder Qualitätsinformationen mit weiteren Informationen assoziiert werden, beispielsweise mit der Anzahl und/oder des jeweiligen Alters der Personen eines Haushalts zur Erstellung eines persönlichen Verbrauchsprofils oder beispielsweise mit der Jahreszeit zur Erstellung eines jahreszeitlichen Verbrauchsprofils. Alternative kann ein Reinigungs-, bzw. Waschprofil erstellt werden.

Durch diese Maßnahmen kann die Zuverlässigkeit eines Prüfens, ob ein Aufbrauchen eines Vorrats des Reinigungsmittels zu erwarten ist, erhöht werden.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Die Verwendung des unbestimmten Artikels schließt eine Mehrzahl nicht aus. Eine einzelne Vorrichtung kann die Funktionen mehrerer in den Patentansprüchen genannten Einheiten bzw. Vorrichtungen ausführen. In den Patentansprüchen angegebene Bezugszeichen sind nicht als Beschränkungen der eingesetzten Mittel und Schritte anzusehen.

## Patentansprüche

1. Verfahren, durchgeführt von zumindest einer Vorrichtung, das Verfahren umfassend:

   - Beleuchten (510) zumindest eines Teils von in einem Wäschebehälter (302) einer Waschmaschine (300) befindlichen, einem Waschvorgang zu unterziehenden Wäschestücken (320);
   - Ermitteln (520) von Farbinformation indikativ für eine oder mehrere Farben zumindest eines Teils der in dem Wäschebehälter (302) der Waschmaschine (300) befindlichen, beleuchteten Wäschestücke (320); und
   - Prüfen (530), zumindest teilweise basierend auf der ermittelten Farbinformation, ob sich ein potentiell unerwünschtes Wäschestück (322)in dem Wäschebehälter (302) der Waschmaschine (300) befindet,
   - wobei das potentiell unerwünschte Wäschestück ein Wäschestück ist, das in einem Waschvorgang nicht erwünscht ist und/oder das nicht mit übrigen Wäschestücken zusammen gewaschen werden soll,
   - wobei das Beleuchten durch zumindest eine Beleuchtungseinheit (115) erfolgt und/oder das Ermitteln von Farbinformation durch zumindest eine Detektoreinheit (116) erfolgt,
   - wobei das Verfahren **dadurch gekennzeichnet ist, dass** das Verfahren weiterhin umfasst:

- Durchmengen der in dem Wäschebehälter (302) der Waschmaschine (300) befindlichen Wäschestücke (320) vor Beginn des Waschvorgangs, insbesondere zumindest zeitweise während des Beleuchtens und/oder des Ermittelns der Farbinformation

- Feststellen, dass sich ein potentiell unerwünschtes Wäschestück (322) in dem Wäschebehälter (302) der Waschmaschine (300) befindet, wenn basierend auf der ermittelten Farbinformation ein Farbabstand einen vordefinierten Farbabstand erreicht oder überschreitet.

2. Verfahren nach Anspruch 1, wobei die Beleuchtungseinheit (115) und/oder die Detektoreinheit (116) innerhalb des Wäschebehälters (302) der Waschmaschine (300) angeordnet oder anordenbar sind.

3. Verfahren nach Anspruch 2, wobei die Beleuchtungseinheit (115) und/oder die Detektoreinheit (116) innerhalb des Wäschebehälters (302) der Waschmaschine (300) frei beweglich ausgebildet sind.

4. Verfahren nach Anspruch 1, wobei die Beleuchtungseinheit (115) und/oder die Detektoreinheit (116) außerhalb des Wäschebehälters (302) der Waschmaschine (300) angeordnet oder anordenbar sind.

5. Verfahren nach Anspruch 1, wobei das Durchmengen derart erfolgt, dass sich die in dem Wäschebehälter (302) der Waschmaschine (300) befindlichen Wäschestücke (320) zeitweise in freiem Fall befinden.

6. Verfahren nach Anspruch 5, wobei das Verfahren weiterhin umfasst:

- Feststellen, dass sich die in dem Wäschebehälter (302) der Waschmaschine (300) befindlichen Wäschestücke (320) zeitweise in freiem Fall befinden, zumindest basierend auf zumindest einem Parameter des den Wäschebehälter (302) antreibenden Antriebs.

7. Verfahren nach einem der vorhergehenden Ansprüche, wobei das Verfahren weiterhin umfasst:

- Unterbinden (540) oder Aussetzen des Waschvorgangs, falls festgestellt wird, dass sich ein potentiell unerwünschtes Wäschestück (322) in dem Wäschebehälter (302) der Waschmaschine (300) befindet.

8. Verfahren nach Anspruch 7, wobei das Verfahren weiterhin umfasst:

- Bereitstellen oder Auslösen eines Bereitstellens einer Ausgabe an einen Benutzer, falls festgestellt wird, dass sich ein potentiell unerwünschtes Wäschestück (322) in dem Wäschebehälter (302) der Waschmaschine (300) befindet.

9. Verfahren nach Anspruch 7 oder 8, wobei das Verfahren weiterhin umfasst:

- Initiieren oder Fortsetzen des Waschvorgangs, falls eine Freigabe des Waschvorgangs von einem Benutzer erhalten wird.

10. Verfahren nach einem der Ansprüche 7 bis 9, wobei das Verfahren weiterhin umfasst:

- Initiieren (570) oder Fortsetzen des Waschvorgangs bei oder nach Ablauf einer vordefinierten Zeitdauer und optional

- Beeinflussen eines oder mehrere Parameter des Waschvorgangs.

11. Verfahren nach einem der vorhergehenden Ansprüche, wobei das Verfahren weiterhin umfasst:

- Ermitteln eines oder mehrerer empfohlener Parameter für den Waschvorgang zumindest teilweise basierend auf der ermittelten Farbinformation.

12. Verfahren nach Anspruch 11, wobei der eine oder die mehreren empfohlenen Parameter für den Waschvorgang umfassen:

- einen Temperaturparameter,
- einen Schleuderparameter,
- ein Waschprogrammparameter, und/oder
- einen Waschmittelparameter.

13. Verfahren nach einem der Ansprüche 11 bis 12, wobei das Verfahren weiterhin umfasst:

- Beeinflussen des Waschvorgangs, zumindest teilweise basierend auf dem einen oder den mehreren ermittelten, empfohlenen Parametern für den Waschvorgang.

14. Vorrichtung, welche zumindest einen Prozessor (110), zumindest einen Speicher (111, 112) mit Computerprogrammcode, zumindest eine Beleuchtungseinheit (115) und zumindest eine Detektoreinheit (116) umfasst welche dazu eingerichtet ist ein Verfahren nach einem der Ansprüche 1 bis 13 durchzuführen und/oder zu steuern.

## Claims

1. A method, carried out by at least one apparatus, the method comprising:

   - illuminating (510) at least some of the items of laundry (320) which are located in a laundry container (302) of a washing machine (300) and are to be subjected to a washing process;
   - determining (520) color information that is indicative of one or more colors of at least some of the illuminated items of laundry (320) that are located in the laundry container (302) of the washing machine (300); and
   - checking (530), based at least in part on the determined color information, whether a potentially undesirable item of laundry (322) is located in the laundry container (302) of the washing machine (300).
   - the potentially undesirable item of laundry being an item of laundry which is not desired in a washing process and/or which is not to be washed together with other items of laundry,
   - the illumination being provided by at least one lighting unit (115) and/or the color information being determined by at least one detector unit (116),
   - the method being **characterized in that** the method further comprises:
   - thoroughly mixing the items of laundry (320) that are located in the laundry container (302) of the washing machine (300) before the washing process begins, in particular at least temporarily during illuminating and/or determining the color information
   - establishing that a potentially undesirable item of laundry (322) is located in the laundry container (302) of the washing machine (300) when, based on the determined color information, a color difference reaches or exceeds a predefined color difference.

2. The method according to claim 1, wherein the lighting unit (115) and/or the detector unit (116) are or can be arranged inside the laundry container (302) of the washing machine (300).

3. The method according to claim 2, wherein the lighting unit (115) and/or the detector unit (116) are designed to be freely movable inside the laundry container (302) of the washing machine (300).

4. The method according to claim 1, wherein the lighting unit (115) and/or the detector unit (116) are or can be arranged outside the laundry container (302) of the washing machine (300).

5. The method according to claim 1, wherein the thorough mixing is carried out in such a way that the items of laundry (320) located in the laundry container (302) of the washing machine (300) are temporarily in free fall.

6. The method according to claim 5, wherein the method also comprises:

   - establishing that the items of laundry (320) located in the laundry container (302) of the washing machine (300) are temporarily in free fall, at least based on at least one parameter of the drive driving the laundry container (302).

7. The method according to one of the preceding claims, wherein the method also comprises:

   - preventing (540) or pausing the washing process if it is established that a potentially undesirable item of laundry (322) is located in the laundry container (302) of the washing machine (300).

8. The method according to claim 7, wherein the method also comprises:

   - providing or triggering provision of an output to a user if it is established that a potentially undesirable item of laundry (322) is located in the laundry container (302) of the washing machine (300).

9. The method according to claim 7 or 8, wherein the method also comprises:

   - initiating or resuming the washing process if approval for the washing process is obtained from the user.

10. The method according to one of claims 7 to 9, wherein the method also comprises:

    - initiating (570) or resuming the washing process at or after a predefined time and optionally
    - influencing one or more parameters of the washing process.

11. The method according to one of the preceding claims, wherein the method also comprises:

    - determining one or more recommended parameters for the washing process, based at least in part on the determined color information.

12. The method according to claim 11, wherein the one or more recommended parameters for the washing process comprise:

- a temperature parameter,
- a spinning parameter,
- a washing program parameter, and/or
- a washing agent parameter.

13. The method according to one of claims 11 to 12, wherein the method also comprises:

    - influencing the washing process, based at least in part on the one or more determined recommended parameters for the washing process.

14. A device which comprises at least one processor (110), at least one memory (111, 112) comprising computer program code, at least one lighting unit (115) and at least one detector unit (116), which is set up to carry out and/or control a method according to one of claims 1 to 13.


**Revendications**

1. Procédé, mis en oeuvre par au moins un dispositif, le procédé comprenant :

    - l'éclairage (510) d'au moins une partie d'articles de linge (320) se trouvant dans un récipient à linge (302) d'un lave-linge (300) et devant être soumis à un processus de lavage ;
    - la détermination (520) d'une information de couleur indiquant une ou plusieurs couleurs d'au moins une partie des articles de linge (320) éclairés et se trouvant dans le récipient à linge (302) du lave-linge (300) ; et
    - la vérification (530), au moins en partie sur la base de l'information de couleur déterminée, du fait de savoir si un article de linge potentiellement indésirable (322) se trouve dans le récipient à linge (302) du lave-linge (300),
    - dans lequel l'article de linge potentiellement indésirable est un article de linge qui n'est pas désiré dans un processus de lavage et/ou qui ne doit pas être lavé conjointement avec le reste des articles de linge,
    - dans lequel l'éclairage est effectué par au moins une unité d'éclairage (115) et/ou la détermination de l'information de couleur est effectuée par au moins une unité de détection (116),
    - dans lequel le procédé est **caractérisé en ce que** le procédé comprend en outre :
    - le mélange des articles de linge (320) se trouvant dans le récipient à linge (302) du lave-linge (300) avant le début du processus de lavage, en particulier au moins temporairement pendant l'éclairage et/ou la détermination de l'information de couleur
    - l'établissement du fait qu'un article de linge potentiellement indésirable (322) se trouve dans le récipient à linge (302) du lave-linge (300) si, sur la base de l'information de couleur déterminée, un écart de couleur atteint ou dépasse un écart de couleur prédéfini.

2. Procédé selon la revendication 1, dans lequel l'unité d'éclairage (115) et/ou l'unité de détection (116) sont disposées ou peuvent être disposées à l'intérieur du récipient à linge (302) du lave-linge (300).

3. Procédé selon la revendication 2, dans lequel l'unité d'éclairage (115) et/ou l'unité de détection (116) sont réalisées de manière à pouvoir se déplacer librement à l'intérieur du récipient à linge (302) du lave-linge (300).

4. Procédé selon la revendication 1, dans lequel l'unité d'éclairage (115) et/ou l'unité de détection (116) sont disposées ou peuvent être disposées à l'extérieur du récipient à linge (302) du lave-linge (300).

5. Procédé selon la revendication 1, dans lequel le mélange est effectué de telle sorte que les articles de linge (320) se trouvant dans le récipient à linge (302) du lave-linge (300) se trouvent temporairement en chute libre.

6. Procédé selon la revendication 5, dans lequel le procédé comprend en outre :

    - l'établissement du fait que les articles de linge (320) se trouvant dans le récipient à linge (302) du lave-linge (300) se trouvent temporairement en chute libre, au moins sur la base d'au moins un paramètre de l'entraînement entraînant le récipient à linge (302).

7. Procédé selon l'une des revendications précédentes, dans lequel le procédé comprend en outre :

    - l'arrêt (540) ou l'interruption du processus de lavage s'il est établi qu'un article de linge potentiellement indésirable (322) se trouve dans le récipient à linge (302) du lave-linge (300).

8. Procédé selon la revendication 7, dans lequel le procédé comprend en outre :

    - la fourniture ou le déclenchement de la fourniture d'une sortie pour un utilisateur s'il est établi qu'un article de linge potentiellement indésirable (322) se trouve dans le récipient à linge (302) du lave-linge (300).

9. Procédé selon la revendication 7 ou 8, dans lequel le procédé comprend en outre :

    - le lancement ou la poursuite du processus de lavage si une validation du processus de lavage par un utilisateur est obtenue.

10. Procédé selon l'une des revendications 7 à 9, dans lequel le procédé comprend en outre :

   - le lancement (570) ou la poursuite du processus de lavage à une période de temps prédéfinie ou après l'écoulement de celle-ci et éventuellement
   - la modification d'un ou de plusieurs paramètres du processus de lavage.

11. Procédé selon l'une des revendications précédentes, dans lequel le procédé comprend en outre :

   - la détermination d'un ou de plusieurs paramètres recommandés pour le processus de lavage au moins en partie sur la base de l'information de couleur déterminée.

12. Procédé selon la revendication 11, dans lequel le ou les paramètres recommandés pour le processus de lavage comprennent :

   - un paramètre de température,
   - un paramètre d'essorage,
   - un paramètre de programme de lavage, et/ou
   - un paramètre d'agent de lavage.

13. Procédé selon l'une des revendications 11 à 12, dans lequel le procédé comprend en outre :

   - la modification du processus de lavage, au moins en partie sur la base du ou des paramètres recommandés déterminés pour le processus de lavage.

14. Dispositif, lequel comprend au moins un processeur (110), au moins une mémoire (111, 112) comportant un code de programme informatique, au moins une unité d'éclairage (115) et au moins une unité de détection (116), lequel est configuré pour mettre en oeuvre et/ou commander un procédé selon l'une des revendications 1 à 13.

Fig.1

Fig.2

Fig.3

Fig.4

100

510

Beleuchten zumindest eines Teils von in einem Wäschebehälter einer Waschmaschine befindlichen, einem Waschvorgang zu unterziehenden Wäschestücken

520

Ermitteln von Farbinformation indikativ für eine oder mehrere Farben zumindest eines Teils der in dem Wäschebehälter der Waschmaschine befindlichen, beleuchteten Wäschestücke

530

Nein

Prüfen, zumindest teilweise basierend auf der ermittelten Farbinformation, ob sich ein potentiell unerwünschtes Wäschestück in dem Wäschebehälter der Waschmaschine befindet

Ja

540

Unterbinden eines Waschvorgangs

550

Bereitstellen einer Ausgabe an einen Benutzer

560

Erhalten einer Freigabe des Waschvorgangs von einem Benutzer

570

Initiieren des Waschvorgangs

Fig.5

610

611

612

613

614

615

616

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2659047 B1
- US 2008276964 A1

- WO 2008000812 A

**In der Beschreibung aufgeführte Nicht-Patentliteratur**

- **ROBERT A. MASCHAL JR. ; S. SUSAN YOUNG ; JOE REYNOLDS ; KEITH KRAPELS ; JONATHAN FANNING ; TED CORBIN.** Review of Bayer Pattern Color Filter Array (CFA) Demosaicing with New Quality Assessment Algorithms. *ARL-TR-5061,* Januar 2010